# EUROPÄISCHE PATENTSCHRIFT

(11) **EP 1 044 123 B1**
(45) Veröffentlichungstag und Bekanntmachung des Hinweises auf die Patenterteilung: **08.02.2006**
(21) Anmeldenummer: 99957938.6
(22) Anmeldetag: 28.10.1999
(51) Int. Cl.: B60S 5/04

(54) **AUTOMATISCHES FAHRZEUG- REIFENDRUCKMESS/- EINSTELLSYSTEM UND FAHRZEUG- REIFENDRUCKMESS/- EINSTELLVERFAHREN**
SYSTEM FOR AUTOMATICALLY MEASURING/ADJUSTING THE TIRE PRESSURE OF A MOTOR VEHICLE AND METHOD FOR MEASURING/ADJUSTING THE TIRE PRESSURE OF A MOTOR VEHICLE
SYSTEME AUTOMATIQUE DE MESURE ET D'AJUSTEMENT DE LA PRESSION DE PNEUS DE VEHICULE ET PROCEDE DE MESURE ET D'AJUSTEMENT DE LA PRESSION DE PNEUS DE VEHICULE

(30) Priorität: 09.11.1998 DE 19851563
(43) Veröffentlichungstag der Anmeldung: 18.10.2000
(73) Patentinhaber: ROBERT BOSCH GMBH, 70442 Stuttgart (DE)
(72) Erfinder: HAAS, Hardy, D-71254 Ditzingen (DE); MOELLER, Hubert, F-75116 Paris (FR); FAYE, Ian, D-70192 Stuttgart (DE); VOLLERT, Herbert, D-71665 Vaihingen/Enz (DE)
(86) Internationale Anmeldenummer: PCT/DE1999/003449
(87) Internationale Veröffentlichungsnummer: WO 2000/027678

(56) Entgegenhaltungen:
- WO-A-94/03391
- DE-A- 3 308 080
- GB-A- 2 323 453

## Beschreibung

### STAND DER TECHNIK

Die vorliegende Erfindung betrifft ein automatisches Fahrzeug-Reifendruckmess/-einstellsystem zum Messen und Einstellen des Reifendrucks eines Fahrzeugs gemäß dem Oberbegriff des Anspruchs 1, wie aus der GB 2323453A bekannt, sowie ein entsprechendes automatisches Fahrzeug-Reifendruckmess/-einstellverfahren.

Obwohl auf beliebige Fahrzeuge anwendbar, werden die vorliegende Erfindung sowie die ihr zugrundeliegende Problematik in Bezug auf ein Kraftfahrzeug, z.B. einen Personenkraftwagen (PKW), erläutert.

Allgemein ist es zur Erzielung optimaler Fahreigenschaften erforderlich, die Reifen eines Fahrzeuges mit einem Luftdruck zu befüllen, der in Abhängigkeit von bestimmten Parametern, wie z.B. Zuladungsgewicht, Lufttemperatur, Reifentemperatur, Höchstgeschwindigkeit, Straßenzustand usw., innerhalb eines engen Druckbereichs (z.B. 2,8 bar +/- 0,05 bar) liegen muss.

Insbesondere ist der Reifendruck ein kritischer Parameter für die Leistung von Kraftfahrzeugsystemen, wie z.B. Antiblockiersystem (ABS), Antriebsschlupfregelung (ASR) und elektronisches Stabilitätsprogramm (ESP), so daß eine Reifendrucküberwachung oder eine regelmäßige Überprüfung und die richtige Einstellung des Reifendruckes, z.B. nach Änderung der Beladung, deutlich zu einem Gewinn hinsichtlich der Fahrsicherheit beitragen kann.

Viele Firmen bieten in jüngerer zeit Reifendrucküberwachungssysteme an, die im Fahrzeug eingebaut sind und den Fahrer warnen, wenn ein oder mehrere Reifen einen zu geringen bzw. einen zu hohen Druck aufweisen, beispielweise durch eine entsprechende Warnleuchte.

Diese bekannten Reifendrucküberwachungssysteme arbeiten anhand von Schätzungen oder direkten Messungen. Sie haben allgemein die positive Eigenschaft, daß sie zeitlich nahezu kontinuierlich arbeiten und den Fahrer bei einem Druckverlust sofort warnen können.

Ein wesentlicher Nachteil dieser Systeme ist allerdings die bisherig erreichbare Zuverlässigkeit, die heutzutage zu vernünftigen Kosten angeboten werden kann. Auch muß der Fahrer bei erkanntem Druckverlust selbst aktiv werden und entsprechende Maßnahmen ergreifen. Dies ist üblicherweise störend, da die Reifendruckkorrektur einen insbesondere für ältere Personen anstrengenden und mit Beschmutzung der Hände verbundenen Eingriff erfordert.

Zudem sind die an den Tankstellen aufgestellten Reifendrukkeinstellsysteme oft in einem schlechten Zustand, was dazu führt, daß der gewünschte Reifendruck nicht genau einstellbar ist.

Ein weiteres Problem bereitet die genaue Ermittlung des SOLL-Reifendrucks. Dies geschieht üblicherweise über an der Tankstelle oder im Fahrzeug angebrachte Tabellen. Tankstellenstationäre Automaten mit Druckmeßfunktionen und Druckberechnungsfunktionen sind bisher nicht bekannt.

Da sich die heutigen Tankstellen immer mehr zum Treffpunkt und Dienstleistungsort entwickeln, wäre es wünschenswert, wenn ein automatisches Reifendruckmeß/-einstellsystem auch zu einer Art "All-Around-Service-Paket" (mit weiteren Serviceleistungen, wie z.B. Robotertanken, allgemeine Reinigung, Flüssigkeitsmeße usw.) gehörte.

### VORTEILE DER ERFINDUNG

Das erfindungsgemäße automatische Fahrzeug-Reifendruckmeßsystem mit den Merkmalen des Anspruchs 1 und das entsprechende automatische Fahrzeug-Reifendruckmeßverfahren gemäß Anspruch 18 weisen gegenüber den bekannten Lösungsansätzen den Vorteil auf, daß sie eine automatische fahrzeugbezogene Reifendruckkontrolle ohne störenden manuellen und berechnenden Eingriff des Fahrers ermöglichen.

Es handelt sich um ein Komfortsystem für die Fahrzeugbedienung. Prinzipiell kann damit bei jedem Anfahren einer Tankstelle der Reifendruck automatisch eingestellt und das optimale Fahrverhalten des Fahrzeuges gewährleistet werden.

Die der vorliegenden Erfindung zugrundeliegende Idee besteht darin, daß eine automatische Reifendruckmessung/-einstellung für ein Fahrzeug an einem (Kraft)fahrzeug-Service-ort (z.B. einer Tankstelle) vorgesehen ist, obwohl er rein theoretisch auch ein Teil des Fahrzeuges selbst (insbesondere für Nutzfahrzeuge mit einer Druckluftversorgung wäre eine solche Variante des Systems denkbar) sein kann. Die Erfindung sieht insbesondere eine Kommunikation zwischen dem Fahrzeug und dem Fahrzeug-Reifendruckmeß/-einstellsystem vor, um einen fahrzeugspezifischen optimalen Reifendruck zu ermitteln.

Kern der Erfindung ist mit anderen Worten die automatische Reifendruckmessung/-einstellung nach fahrzeugbezogenen Daten, wie z.B. bisherige Fahrtbedingungen, Zuladungsgewicht usw. Auch die gemessene Reifenlufttemperatur sowie nichtfahzeugbezogene Parameter, wie z.B. erwünschte Höchstgeschwindigkeit, Straßenzustand der Fahrtroute, Außenlufttemperatur, Wettervorhersage, sind durch entsprechende Eingaben bei der Ermittlung des SOLL-Reifendrucks berücksichtigbar.

In den Unteransprüchen finden sich vorteilhafte Weiterbildungen und Verbesserungen des erfindungsgemäßen automatischen Fahrzeug-Reifendruckmeß/-einstellsystems.

Gemäß einer bevorzugten Weiterbildung ist der fahrzeugspezifische Parameter aus folgender Gruppe ausgewählt: Fahrzeugtyp, Reifentyp (z.B. Hersteller bzw. Sommer-/ Winterreifen), Fahrzeugmasse, Anzahl der Fahrzeuginsassen, Fahrzeugbetriebsinformation.

Gemäß einer weiteren bevorzugten Weiterbildung ist eine zweite Kommunikationseinrichtung vorgesehen, welche mit der Ermittlungseinrichtung verbindbar ist, zum Eingeben mindestens eines nicht-fahrzeugspezifischen Parameters, wobei die Ermittlungseinrichtung derart gestaltet ist, daß sie den SOLL-Reifendruck unter Berücksichtigung von mindestens einem nicht-fahrzeugspezifischen Parameters ermittelt.

Gemäß einer weiteren bevorzugten Weiterbildung ist der nicht-fahrzeugspezifische Parameter aus folgender Gruppe ausgewählt: gewünschte Höchstgeschwindigkeit, Straßenzustand der gewünschten Fahrtroute, Außenlufttemperatur, Wettervorhersage.

Gemäß einer weiteren bevorzugten Weiterbildung weist die Reifendruckmeßeinrichtung eine Reifenlufttemperaturmeßeinrichtung zum Messen der Reifenlufttemperatur auf, wobei die Ermittlungseinrichtung derart gestaltet ist, daß sie den SOLL-Reifendruck unter Berücksichtigung der gemessenen Reifenlufttemperatur ermittelt. Fehler bei der Luftdruckeinstellung der Reifen, z.B. Ablassen von Luft weil ein erwärmter Reifen einen höheren Druck vortäuscht, können so vermieden werden.

Gemäß einer weiteren bevorzugten Weiterbildung weist der Handhabungsautomat eine Ventilkappenschraubereinrichtung zum An- und Abschrauben der Ventilkappe auf.

Gemäß einer weiteren bevorzugten Weiterbildung ist das automatische Fahrzeug-Reifendruckmeß/-einstellsystem an einer Tankstelle im Bereich einer Zapfsäule installiert und während des Betankens des Fahrzeugs aktivierbar. Dies hat den Vorteil, daß die Reifendruckkontrolle dann aus der Sicht des Fahrers überhaupt keinen Zusatzaufwand mehr beinhaltet.

Gemäß einer weiteren bevorzugten Weiterbildung ist die erste Kommunikationseinrichtung mit einem Bordcomputer des Fahrzeuges verbindbar. So können der oder die fahrzeugspezifischen Parameter aus einem zum Bordcomputer gehörigen Speicher entnommen werden oder dort verändert werden, z.B. bei Austausch eines Reifenmodells gegen ein anderes Reifenmodell, das andere Drücke erfordert.

Gemäß einer weiteren bevorzugten Weiterbildung ist die erste Kommunikationseinrichtung mit einer im Fahrzeug befindlichen Massenschätzeinrichtung verbindbar, durch welche die Fahrzeugmasse vorzugsweise aus dem Fahrzeugleergewicht und einem zum Erreichen einer bestimmten Beschleunigung benötigten Antriebsmoment schätzbar ist.

Gemäß einer weiteren bevorzugten Weiterbildung ist Hangneigungskorrektureinrichtung zum Ermitteln einer Hangneigungskorrektur für die Massenschätzeinrichtung vorgesehen.

Gemäß einer weiteren bevorzugten Weiterbildung ist die Ermittlungseinrichtung derart gestaltet, daß sie den SOLL-Reifendruck unter Berücksichtigung einer GPS-Höhenmessung ermittelt.

Gemäß einer weiteren bevorzugten Weiterbildung ist die Ermittlungseinrichtung derart gestaltet, daß die den SOLL-Reifendruck anhand einer darin gespeicherten Tabelle ermittelt.

Gemäß einer weiteren bevorzugten Weiterbildung ist der Handhabungsautomat entlang einer Schieneneinrichtung bewegbar. So genügt die Bereitstellung eines mechanischen Roboters für alle Reifen eines Fahrzeuges.

Gemäß einer weiteren bevorzugten Weiterbildung ist eine mit der Ermittlungseinrichtung verbindbare Übertragungseinrichtung vorgesehen, welche derart gestaltet ist, daß die den SOLL-Reifendruck und/oder eine Differenz zwischen dem SOLL-Reifendruck und dem IST-Reifendruck zum Fahrzeug zur dortigen Speicherung und/oder Anzeige überträgt.

Gemäß einer weiteren bevorzugten Weiterbildung ist im Fahrzeug eine Auswerteeinrichtung vorgesehen, welche derart gestaltet ist, daß sie die Häufigkeit und/oder Größe der übertragenen Differenzen auswertet und daraus unter Berücksichtigung einer möglichen Änderung der Differenzen einen Hinweis für Reifenprobleme erstellt. Üblich ist beispielsweise ein Druckverlust von 0,1 bar/ Monat. Bei höheren Verlusten kann es eine Undichtigkeit geben, worüber der Fahrer dann informiert wird.

Gemäß einer weiteren bevorzugten Weiterbildung ist die Ermittlungseinrichtung außerhalb des Fahrzeugs angeordnet und die Kommunikationseinrichtung über eine drahtlose Schnittstelle, vorzugsweise eine Infrarotschnittstelle oder eine Funkschnittstelle, damit verbindbar.

Gemäß einer weiteren bevorzugten Weiterbildung ist die Ermittlungseinrichtung innerhalb des Fahrzeugs angeordnet ist und über eine drahtlose Schnittstelle, vorzugsweise eine Infrarotschnittstelle oder eine Funkschnittstelle, mit der Reifendruckeinstelleinrichtung verbindbar.

### ZEICHNUNGEN

Ein Ausführungsbeispiel der Erfindung ist in den Zeichnungen dargestellt und in der nachfolgenden Beschreibung näher erläutert.

Es zeigen:
- Fig. 1: eine schematische seitliche Darstellung einer Ausführungsform des erfindungsgemäßen automatischen Fahrzeug-Reifendruckmeß/-einstellsystems; und
- Fig. 2: eine schematische Oberseiten-Darstellung der Ausführungsform des erfindungsgemäßen automatischen Fahrzeug-Reifendruckmeß/-einstellsystems nach Fig. 1.

### BESCHREIBUNG DER AUSFÜHRUNGSBEISPIELE

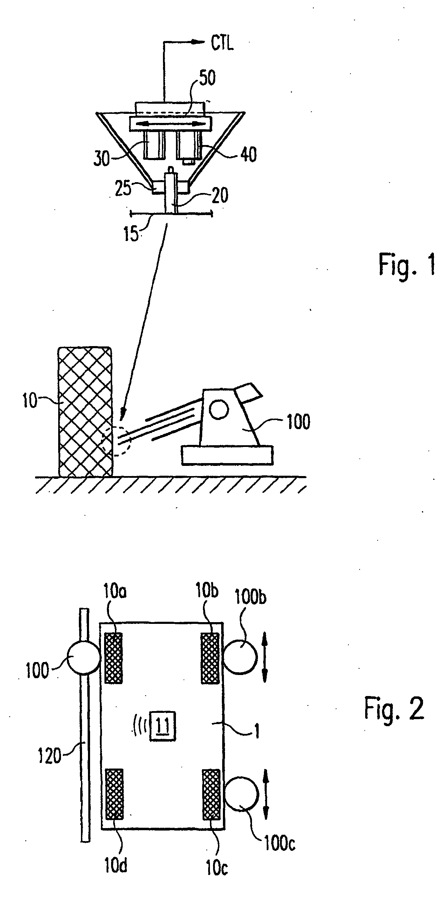

Fig. 1 zeigt eine schematische seitliche Darstellung und
Fig. 2 eine Oberseiten-Darstellung einer Ausführungsform des erfindungsgemäßen automatischen Fahrzeug-Reifendruckmeß/-einstellsystems .

In Fig. 1 und 2 bezeichnen 1 ein Fahrzeug; 10, 10a, 10b, 10c, 10d Reifen des Fahrzeugs 1; 100, 100b, 100c einen Handhabungsautomat; 11 eine Infrarot-Kommunikationseinrichtung; 120 eine Schiene; 15 eine Felge; 20 ein Ventil; 25 eine Klemmeinrichtung; 30 einen Druckaufsatz; 40 einen Ventilkappenschrauber; 50 eine Positioniereinrichtung und CTL eine nicht dargestellte Steuereinrichtung.

Das automatische Fahrzeug-Reifendruckmeß/-einstellsystem zum Messen und Einstellen des Reifendrucks des Fahrzeugs 1 gemäß dieser Ausführungsform ist an einer Tankstelle im Bereich einer Zapfsäule installiert und während des Betankens des Fahrzeugs 1 aktivierbar.

Der Handhabungsautomat 100 ist auf das Ventil 20 des Reifens 1 in eine Reifendruckmeß/-einstellposition positionierbar. Dazu wird zunächst die Klemmeinrichtung 20 über den Ventilschaft geführt und daran verklemmt. Dies kann mittels üblicher Tastsensoren oder optischer Bilderkennungsverfahren geschehen. Mittels der Positionierungseinrichtung 50 kann erforderlichenfalls der Ventilkappenschrauber 40 zur Ventilkappe geführt werden und diese vor der Reifendruckkontrolle abschrauben bzw. danach wieder anschrauben. Wie Fig. 2 entnehmbar, kann der Handhabungsautomat 100 entlang der Schieneneinrichtung 120 bewegbar sein oder für jeden der hier vier Fahrzeugreifen separat vorgesehen sein (dargestellt als 100b, 100c) oder zwei Einheiten könnten beispielweise eine Seite des Fahrzeugs 1 bedienen. Die erste Alternative ist kostengünstiger, die zweite schneller im Betrieb.

Ebenfalls mittels der Positionierungseinrichtung 50 kann der Druckaufsatz 30 dichtend auf das Ventil gesetzt werden. Eine mit dem Druckaufsatz 30 verbindbare (nicht gezeigte) Reifendruckmeßeinrichtung dient zum Messen des IST-Reifendrucks. Die Reifendruckmeßeinrichtung weist eine Reifenlufttemperaturmeßeinrichtung zum Messen der Reifenlufttemperatur auf, damit die Ermittlungseinrichtung den SOLL-Reifendruck unter Berücksichtigung der gemessenen Reifenlufttemperatur ermitteln kann.

Eine ebenfalls nicht dargestellte außerhalb des Fahrzeugs angebrachte Ermittlungseinrichtung dient zum Ermitteln des SOLL-Reifendrucks unter Berücksichtigung der fahrzeugspezifischen Parameter Fahrzeugtyp, Reifentyp, Fahrzeugmasse, Anzahl der Fahrzeuginsassen und möglichen weiteren Fahrzeugbetriebsinformationen, z.B. integrierter Wert von Dauer und Geschwindigkeit der Fahrt, was ein Maß dafür ist, ob kalte oder warme Reifen zu erwarten sind.

Diese fahrzeugspezifischen Parameter sind mit der im Fahrzeug befindlichen ersten Kommunikationseinrichtung 11 in Form eines mit dem Bordcomputer verbundenen Infrarotsenders zur außerhalb des Fahrzeugs gelegenen Ermittlungseinrichtung, welche zweckmäßigerweise ein Teil der Steuereinrichtung CTL ist, übertragbar.

Eine nicht gezeigte mit dem Druckaufsatz 30 verbindbare Reifendruckeinstelleinrichtung, welche mit der Ermittlungseinrichtung zur Übermittlung des SOLL-Reifendrucks verbindbar ist, dient zum Einstellen übermittelten SOLL-Reifendrucks.

Eine zweite Kommunikationseinrichtung kann zusätzlich innerhalb oder außerhalb des Fahrzeuges vorgesehen sein, welche mit der Ermittlungseinrichtung zum Eingeben mindestens eines nicht-fahrzeugspezifischen Parameters verbindbar ist, wobei die Ermittlungseinrichtung derart gestaltet ist, daß sie den SOLL-Reifendruck unter Berücksichtigung des mindestens einen nicht-fahrzeugspezifischen Parameters ermittelt, der z.B. die gewünschte Höchstgeschwindigkeit, den Straßenzustand der gewünschten Fahrtroute oder die Außenlufttemperatur oder die Wettervorhersage wiedergibt.

Ebenfalls im Fahrzeug befindet sich eine Massenschätzeinrichtung, durch welche die Fahrzeugmasse aus dem Fahrzeugleergewicht und einem zum Erreichen einer bestimmten Beschleunigung benötigten Antriebsmoment (bei bestimmter Getriebestellung) schätzbar ist. Die erste Kommunikationseinrichtung 11 ist mit der Massenschätzeinrichtung verbindbar, um den Wert an die Ermittlungseinrichtung weiterleiten zu können.

Optionellerweise kann die Massenschätzeinrichtung 11 mit einer Hangneigungskorrektureinrichtung zum Ermitteln einer Hangneigungskorrektur verbindbar sein, wobei sie die Massenschätzung unter Berücksichtigung der Hangneigungskorrektur ermittelt.

Ein beispielhafter Ablauf einer Reifendruckmessung/-einstellung könnte folgendermaßen aussehen.

Zunächst erfolgt ein Parken des Fahrzeugs 1 vor der Zapfsäule und ein Einleiten der Betankung. Dies startet ein automatisches Positionieren des Ventilkappenschraubers 40 und Abschrauben der Ventilkappe, falls vorhanden. Danach wird der Druckaufsatzes 30 auf das Ventil 20 des Reifens 1 in eine Reifendruckmeß/-einstellposition bewegt. Der Druckaufsatz 30 verbindet sich über einen geeignten Adapter mit dem Ventil 20.

Nun findet eine Kommunikation von der Kommunikationseinrichtung 11 im Fahrzeug zur Ermittlungseinrichtung im Automaten statt, in der werden folgende Daten übergeben werden: Fahrzeugtyp, Beladung des Fahrzeugs aus Massenschätzung mit Hangneigungkorrektur, Insassenanzahl aus Sensordaten, GPS-Höhenmessung, bisherige Straßenbedingungen.

Daraus wird der erforderliche SOLL-Reifendruck gemäß einer im voraus festgelegten Funktion ausgerechnet oder aus einer im voraus gespeicherten Tabelle festgelegt.

Dann werden Reifendruck und Reifenlufttemperatur gemessen. Der so gemessene IST-Reifendruck wird mit dem ermittelten SOLL-Reifendruck verglichen, welchen die Ermittlungseinrichtung aus den übertragenen Parametern und der Reifenlufttemperatur ermittelt.

Dann wird Luft entsprechend aufgefüllt oder abgelassen.

Schließlich wird Status-Information an den Fahrer zurückgegeben, wozu eine mit der Ermittlungseinrichtung verbindbare Übertragungseinrichtung vorgesehen ist, welche derart gestaltet ist, daß die den SOLL-Reifendruck und/oder eine Differenz zwischen dem SOLL-Reifendruck und dem IST-Reifendruck zum Fahrzeug 1 zur dortigen Speicherung und Anzeige überträgt.

Im Fahrzeug 1 ist eine Auswerteeinrichtung vorgesehen, welche derart gestaltet ist, daß sie die Häufigkeit und/oder Größe der übertragenen Differenzen auswertet. Daraus erstellt sie unter Berücksichtigung einer möglichen Änderung der Differenzen einen Hinweis für Reifenprobleme.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Obwohl bei dem obigen Beispiel die Ermittlungseinrichtung außerhalb des Fahrzeugs vorgesehen ist und ein fahrzeugsspezifischer Parameter über die Infrarotschnittstelle übertragen wird, kann die Ermittlungseinrichtung auch innerhalb des Fahrzeugs angeordnet sein und direkt ein Reifendruckbefehlswert übertragen werden.

Dies hängt im konkreten Fall davon ab, welche Parameter zur Ermittlung des SOLL-Reifendrucks herangezogen werden und wie sie erhältlich sind. Wenn beispielsweis die Reifenlufttemperatur in die Ermittlung des SOLL-Reifendrucks eingehen soll, ist zu unterscheiden, ob sie innerhalb oder außerhalb des Fahrzeugs durch einen entsprechenden Sensor meßbar ist. Im ersten Fall ist die Ermittlungseinrichtung zweckmäßigerweise auch innerhalb des Fahrzeugs angeordnet im zweiten Fall nicht.

Auch sind die Beispiele für die zur Druckberechnung berücksichtigbaren Parameter nicht auf die angegeben Parameter beschränkt, sondern beliebig erweiterbar.

Auch funktioniert das erfindungsgemäße System nicht nur für verkappte Standardventile, sondern auch für etwaige un verkappte oder sonstige Spezialventile.

Selbstverständlich können die angegebenen Kommunikationen auch über ein CAN-Bussystem oder sonstiges Bussystem ablaufen, und sind nicht auf drahtlose Kommunikationen beschränkt.

### BEZUGSZEICHENLISTE:

| 1 | Fahrzeug |
|---|---|
| 10; 10a, 10b, 10c, 10d | Reifen |
| 100; 100b, 100c | Handhabungsautomat |
| 11 | Infrarot-Kommunikationseinrichtung |
| 120 | Schiene |
| 15 | Felge |
| 20 | Ventil |
| 25 | Klemmeinrichtung |
| 30 | Druckaufsatz |
| 40 | Ventilkappenschrauber |
| 50 | Positioniereinrichtung |
| CTL | Steuereinrichtung |

## Patentansprüche

1. Automatisches Fahrzeug-Reifendruckmess/-einstellsystem zum Messen und Einstellen des Reifendrucks eines Fahrzeugs (1) mit:
einem Handhabungsautomat (100; 100b, 100c), welcher einen auf das Ventil (20) des Reifens (1) in eine Reifendruckmess/-einstellposition positionierbaren Druckaufsatz (30) aufweist;
einer mit dem Druckaufsatz (30) verbindbaren Reifendruckmesseinrichtung zum Messen des IST-Reifendrucks;
einer Ermittlungseinrichtung zum Ermitteln des SOLL-Reifendrucks unter Berücksichtigung mindestens eines fahrzeugspezifischen Parameters;
einer im Fahrzeug befindlichen ersten Kommunikationseinrichtung (11), welche mit der Ermittlungseinrichtung verbindbar ist, zum Eingeben des mindestens einen Fahrzeugparameters in die Ermittlungseinrichtung; und
einer mit dem Druckaufsatz (30) verbindbaren Reifendruckeinstelleinrichtung, welche mit der Ermittlungseinrichtung zur Übermittlung des SOLL-Reifendrucks verbindbar ist, zum Einstellen übermittelten SOLL-Reifendrucks,
**dadurch gekennzeichnet, dass**
der Handhabungsautomat mittels einer Tastsensoreinrichtung oder einer optischen Bilderkennungseinrichtung automatisch in die Reifendruckmess/-einstellposition bewegbar ist.

2. Automatisches Fahrzeug-Reifendruckmeß/-einstellsystem nach Anspruch 1, **dadurch gekennzeichnet, daß** der fahrzeugspezifische Parameter aus folgender Gruppe ausgewählt ist: Fahrzeugtyp, Reifentyp, Fahrzeugmasse, Anzahl der Fahrzeuginsassen, Fahrzeugbetriebsinformation.

3. Automatisches Fahrzeug-Reifendruckmeß/-einstellsystem nach Anspruch 1 oder 2, **dadurch gekennzeichnet, daß** eine zweite Kommunikationseinrichtung vorgesehen ist, welche mit der Ermittlungseinrichtung verbindbar ist, zum Eingeben mindestens eines nicht-fahrzeugspezifischen Parameters, wobei die Ermittlungseinrichtung derart gestaltet ist, daß sie den SOLL-Reifendruck unter Berücksichtigung des mindestens einen nicht-fahrzeugspezifischen Parameters ermittelt.

4. Automatisches Fahrzeug-Reifendruclaneß/-einstellsystem nach Anspruch 3, **dadurch gekennzeichnet, daß** der nicht-fahrzeugspezifische Parameter aus folgender Gruppe ausgewählt ist: gewünschte Höchstgeschwindigkeit, Straßenzustand der gewünschten Fahrtroute, Außenlufttemperatur, Wettervorhersage.

5. Automatisches Fahrzeug-Reifendruckmeß/-einstellsystem nach einem der vorhergehenden Ansprüche, **dadurch gekennzeichnet, daß** die Reifendruckmeßeinrichtung eine Reifenlufttemperaturmeßeinrichtung zum Messen der Reifenlufttemperatur aufweist, wobei die Ermittlungseinrichtung derart gestaltet ist, daß sie den SOLL-Reifendruck unter Berücksichtigung der gemessenen Reifenlufttemperatur ermittelt.

6. Automatisches Fahrzeug-Reifendruckmeß/-einstellsystem nach einem der vorhergehenden Ansprüche, **dadurch gekennzeichnet, daß** der Handhabungsautomat (100; 100b, 100c) eine Ventilkappenschraubereinrichtung (40) zum An- und Abschrauben der Ventilkappe aufweist.

7. Automatisches Fahrzeug-Reifendruckmeß/-einstellsystem nach einem der vorhergehenden Ansprüche, **dadurch gekennzeichnet, daß** es an einer Tankstelle im Bereich einer Zapfsäule installiert und während des Betankens des Fahrzeugs aktivierbar ist.

8. Automatisches Fahrzeug-Reifendruckmeß/-einstellsystem nach einem der vorhergehenden Ansprüche, **dadurch gekennzeichnet, daß** die erste Kommunikationseinrichtung (11) mit einem Bordcomputer des Fahrzeuges (1) verbindbar ist.

9. Automatisches Fahrzeug-Reifendruckmeß/-einstellsystem nach einem der vorhergehenden Ansprüche, **dadurch gekennzeichnet, daß** die erste Kommunikationseinrichtung (11) mit einer im Fahrzeug befindlichen Massenschätzeinrichtung verbindbar ist, durch welche die Fahrzeugmasse vorzugsweise aus dem Fahrzeugleergewicht und einem zum Erreichen einer bestimmten Beschleunigung benötigten Antriebsmoment schätzbar ist.

10. Automatisches Fahrzeug-Reifendruckmeß/-einstellsystem nach einem der vorhergehenden Ansprüche, **dadurch gekennzeichnet, daß** eine Hangneigungskorrektureinrichtung zum Ermitteln einer Hangneigungskorrektur für die Massenschätzeinrichtung vorgesehen ist.

11. Automatisches Fahrzeug-Reifendruckmeß/-einstellsystem nach einem der vorhergehenden Ansprüche, **dadurch gekennzeichnet, daß** die Ermittlungseinrichtung derart gestaltet ist, daß sie den SOLL-Reifendruck unter Berücksichtigung einer GPS-Höhenmessung ermittelt.

12. Automatisches Fahrzeug-Reifendruckmeß/-einstellsystem nach einem der vorhergehenden Ansprüche, **dadurch gekennzeichnet, daß** die Ermittlungseinrichtung derart gestaltet ist, daß sie den SOLL-Reifendruck anhand einer darin gespeicherten Tabelle ermittelt.

13. Automatisches Fahrzeug-Reifendruckmeß/-einstellsystem nach einem der vorhergehenden Ansprüche, **dadurch gekennzeichnet, daß** der Handhabungsautomat (100; 100b, 100c) entlang einer Schieneneinrichtung (120) bewegbar ist.

14. Automatisches Fahrzeug-Reifendruckmeß/-einstellsystem nach einem der vorhergehenden Ansprüche, **dadurch gekennzeichnet, daß** eine mit der Ermittlungseinrichtung verbindbare Übertragungseinrichtung vorgesehen ist, welche derart gestaltet ist, daß die den SOLL-Reifendruck und/oder eine Differenz zwischen dem SOLL-Reifendruck und dem IST-Reifendruck zum Fahrzeug (1) zur dortigen Speicherung und/oder Anzeige überträgt.

15. Automatisches Fahrzeug-Reifendruckmeß/-einstellsystem nach Anspruch 14, **dadurch gekennzeichnet, daß** im Fahrzeug (1) eine Auswerteeinrichtung vorgesehen ist, welche derart gestaltet ist, daß sie die Häufigkeit und/oder Größe der übertragenen Differenzen auswertet und daraus unter Berücksichtigung einer möglichen Änderung der Differenzen einen Hinweis für Reifenprobleme erstellt.

16. Automatisches Fahrzeug-Reifendruckmeß/-einstellsystem nach einem der vorhergehenden Ansprüche, **dadurch gekennzeichnet, daß** die Ermittlungseinrichtung außerhalb des Fahrzeugs (1) angeordnet ist und die Kommunikationseinrichtung (11) über eine drahtlose Schnittstelle, vorzugsweise eine Infrarotschnittstelle oder eine Funkschnittstelle, damit verbindbar ist.

17. Automatisches Fahrzeug-Reifendruckmeß/-einstellsystem nach einem der vorhergehenden Ansprüche, **dadurch gekennzeichnet, daß** die Ermittlungseinrichtung innerhalb des Fahrzeugs (1) angeordnet ist und über eine drahtlose Schnittstelle, vorzugsweise eine Infrarotschnittstelle oder eine Funkschnittstelle, mit der Reifendruckeinstelleinrichtung verbindbar ist.

18. Automatisches Fahrzeug-Reifendruckmeß/-einstellverfahren zum Messen und Einstellen des Reifendrucks eines Fahrzeugs mit folgenden Schritten:
Parken des Fahrzeugs (1);
Positionieren eines Druckaufsatzes (30) auf das Ventil (20) des Reifens (1) in eine Reifendruckmeß/-einstellposition;
Eingeben mindestens eines Fahrzeugparameters mittels einer im Fahrzeug befindlichen ersten Kommunikationseinrichtung (11) in eine Ermittlungseinrichtung;
Ermitteln des SOLL-Reifendrucks unter Berücksichtigung des mindestens einen fahrzeugspezifischen Parameters mit der Ermittlungseinrichtung;
Messen des IST-Reifendrucks mit einer mit dem Druckaufsatz (30) verbindbaren Reifendruckmeßeinrichtung;
Vergleichen des ermittelten SOLL-Reifendrucks mit dem IST-Reifendruck; und
Einstellen des ermittelten SOLL-Reifendrucks mit einer mit dem Druckaufsatz (30) verbindbaren Reifendruckeinstelleinrichtung, welche mit der Ermittlungseinrichtung zur Übermittlung des SOLL-Reifendrucks verbindbar ist, zum Einstellen übermittelten SOLL-Reifendrucks im Falle einer Differenz zwischen SOLL-Reifendruck und IST-Reifendruck,
**dadurch gekennzeichnet, dass** das Positionieren des Druckaufsatzes auf das Ventil des Reifens mittels einer Tastsensoreneinrichtung oder einer optischen Bilderkennungseinrichtung automatisch erfolgt.

## Revendications

1. Système automatique de mesure et de réglage de la pression de pneus de véhicule pour mesurer et régler la pression de pneus d'un véhicule (1), comprenant :
- un automate de maniement (100; 100b, 100c) qui présente un chapeau de pression (30) pouvant être positionné sur la valve (20) du pneu (1) dans une position de mesure/réglage de la pression de pneu ;
- un dispositif de mesure de pression de pneu pouvant être relié au chapeau de pression (30) pour mesurer la pression de pneu REELLE ;
- un dispositif de détermination pour déterminer la pression de pneu de CONSIGNE en tenant compte d'au moins un paramètre spécifique du véhicule ;
- un premier dispositif de communication (11) situé dans le véhicule, qui peut être relié au dispositif de détermination pour entrer l'au moins un paramètre du véhicule dans le dispositif de détermination ; et
- un dispositif de réglage de pression de pneu pouvant être relié au chapeau de pression (30) et au dispositif de détermination pour la transmission de la pression de pneu de CONSIGNE pour régler la pression de pneu de CONSIGNE transmise,
**caractérisé en ce que**
l'automate de maniement peut être amené automatiquement dans la position de mesure/réglage de pression de pneu au moyen d'un dispositif à capteurs palpeurs ou d'un dispositif optique d'identification d'images.

2. Système automatique de mesure et de réglage de la pression de pneus de véhicule selon la revendication 1,
**caractérisé en ce que**
le paramètre spécifique du véhicule est choisi dans le groupe suivant : type du véhicule, type du pneu, masse du véhicule, nombre de passagers du véhicule, information concernant le fonctionnement du véhicule.

3. Système automatique de mesure et de réglage de la pression de pneus de véhicule selon la revendication 1 ou 2,
**caractérisé en ce qu'**
un deuxième dispositif de communication prévu peut être relié au dispositif de détermination pour entrer au moins un paramètre non spécifique du véhicule, le dispositif de détermination étant configuré pour déterminer la pression de pneu de CONSIGNE en tenant compte de l'au moins un paramètre non spécifique du véhicule.

4. Système automatique de mesure et de réglage de la pression de pneus de véhicule selon la revendication 3,
**caractérisé en ce que**
le paramètre non spécifique du véhicule est choisi dans le groupe suivant : vitesse maximale souhaitée, état de la route du trajet souhaité, température de l'air extérieur, prévisions météorologiques.

5. Système automatique de mesure et de réglage de la pression de pneus de véhicule selon l'une quelconque des revendications précédentes,
**caractérisé en ce que**
le dispositif de mesure de pression de pneus présente un dispositif de mesure de température de l'air des pneus pour mesurer la température de l'air des pneus, le dispositif de détermination étant configuré pour déterminer le pression de pneus de CONSIGNE en tenant compte de la température de l'air des pneus mesurée.

6. Système automatique de mesure et de réglage de la pression de pneus de véhicule selon l'une quelconque des revendications précédentes,
**caractérisé en ce que**
l'automate de maniement (100 ; 100b, 100c) présente un dispositif de vissage de capuchon de valve (40) pour visser et dévisser le capuchon de valve.

7. Système automatique de mesure et de réglage de la pression de pneus de véhicule selon l'une quelconque des revendications précédentes,
**caractérisé en ce qu'**
il est installé dans une station-service dans la zone d'un distributeur d'essence et peut être activé pendant le ravitaillement du véhicule.

8. Système automatique de mesure et de réglage de la pression de pneus de véhicule selon l'une quelconque des revendications précédentes,
**caractérisé en ce que**
le premier dispositif de communication (11) peut être relié à un ordinateur de bord du véhicule (1).

9. Système automatique de mesure et de réglage de la pression de pneus de véhicule selon l'une quelconque des revendications précédentes,
**caractérisé en ce que**
le premier dispositif de communication (11) peut être relié à un dispositif d'estimation de masse situé dans le véhicule permettant d'estimer la masse du véhicule de préférence à partir du poids à vide du véhicule et d'un couple moteur nécessaire pour obtenir une accélération déterminée.

10. Système automatique de mesure et de réglage de la pression de pneus de véhicule selon l'une quelconque des revendications précédentes,
**caractérisé en ce qu'**
un dispositif de correction de pente est prévu pour déterminer une correction de pente pour le dispositif d'estimation de masse.

11. Système automatique de mesure et de réglage de la pression de pneus de véhicule selon l'une des revendications précédentes,
**caractérisé en ce que**
le dispositif de détermination est conçu pour déterminer la pression de pneus de CONSIGNE en tenant compte d'une mesure d'altitude GPS.

12. Système automatique de mesure et de réglage de la pression de pneus de véhicule selon l'une des revendications précédentes,
**caractérisé en ce que**
le dispositif de détermination est conçu pour déterminer la pression de pneus de CONSIGNE à l'aide d'un tableau mémorisé dans celui-ci.

13. Système automatique de mesure et de réglage de la pression de pneus de véhicule selon l'une des revendications précédentes,
**caractérisé en ce que**
l'automate de maniement (100 ; 100b, 100c) est déplaçable le long d'un dispositif à rail (120).

14. Système automatique de mesure et de réglage de la pression de pneus de véhicule selon l'une des revendications précédentes,
**caractérisé en ce qu'**
un dispositif de transmission pouvant être relié au dispositif de détermination est prévu pour transmettre la pression de pneus de CONSIGNE et/ou une différence entre la pression de pneus de CONSIGNE et la pression de pneus REELLE vers le véhicule (1) à une mémoire et/ou à un affichage.

15. Système automatique de mesure et de réglage de la pression de pneus de véhicule selon l'une des revendications précédentes,
**caractérisé en ce que**
dans le véhicule (1) un dispositif d'exploitation est prévu pour exploiter la fréquence et/ou la grandeur des différences transmises et établir à partir de celle-ci une information concernant des problèmes de pneus, en tenant compte d'une variation possible des différences.

16. Système automatique de mesure et de réglage de la pression de pneus de véhicule selon l'une des revendications précédentes,
**caractérisé en ce que**
le dispositif de détermination est disposé à l'extérieur du véhicule (1) et peut être relié au dispositif de communication (11) par une interface sans fil, de préférence une interface infrarouge ou une interface radio.

17. Système automatique de mesure et de réglage de la pression de pneus de véhicule selon l'une des revendications précédentes,
**caractérisé en ce que**
le dispositif de détermination est disposé à l'intérieur du véhicule (1) et peut être relié au dispositif de réglage de pression de pneus par une interface sans fil, de préférence une interface infrarouge ou une interface radio à laquelle le dispositif de réglage de la pression de pneus peut être relié.

18. Procédé automatique de mesure et de réglage de la pression de pneus de véhicule pour mesurer et régler la pression de pneus d'un véhicule, comprenant les étapes suivantes :
- garer le véhicule (1) ;
- positionner un chapeau de pression (30) sur la valve (20) du pneu (1) dans une position de mesure/de réglage de la pression de pneu ;
- entrer dans un dispositif de détermination au moins un paramètre du véhicule au moyen d'un premier dispositif de communication (11) situé dans le véhicule ;
- déterminer avec le dispositif de détermination la pression de pneus de CONSIGNE en tenant compte de l'au moins un paramètre spécifique du véhicule ;
- mesurer la pression de pneus REELLE avec un dispositif de mesure de pression de pneus pouvant être relié au chapeau de pression (30) ;
- comparer la pression de pneus de CONSIGNE déterminée avec la pression de pneus REELLE ; et
- régler la pression de pneus de CONSIGNE déterminée avec un dispositif de réglage de pression de pneus pouvant être relié au chapeau de pression ainsi qu'au dispositif de détermination pour la transmission de la pression de pneus de CONSIGNE, pour régler la pression de pneus de CONSIGNE transmise dans le cas d'une différence entre la pression de pneus de CONSIGNE et la pression de pneus REELLE,
**caractérisé en ce que**
le positionnement du chapeau de pression sur la valve du pneu s'effectue automatiquement au moyen d'un dispositif à capteurs palpeurs ou d'un dispositif optique d'identification d'images.

## Claims

1. Automatic vehicle tyre pressure measuring/adjusting system for measuring and adjusting the tyre pressure of a vehicle (1) having:
an automatic manipulator (100; 100b, 100c) which has a pressure attachment (30) which can be positioned in a tyre pressure measuring/adjusting position on the valve (20) of the tyre (1);
a tyre pressure measuring device which can be connected to the pressure attachment (30) and has the purpose of measuring the ACTUAL tyre pressure;
a determining device for determining the SETPOINT tyre pressure taking into account at least one vehicle-specific parameter;
a first communications device (11) which is located in the vehicle and can be connected to the determining device, in order to input the at least one vehicle parameter into the determining device; and
a tyre pressure adjusting device which can be connected to the pressure attachment (30) and can be connected to the determining device in order to transfer the SETPOINT tyre pressure and to adjust the transferred SETPOINT tyre pressure,
**characterized in that** the automatic manipulator can be moved automatically into the tyre pressure measuring/adjusting position by means of a touch sensor device or an optical image recognition device.

2. Automatic vehicle tyre pressure measuring/adjusting system according to Claim 1, **characterized in that** the vehicle-specific parameter is selected from the following group: vehicle type, tyre type, vehicle mass, number of vehicle occupants, vehicle operating information.

3. Automatic vehicle tyre pressure measuring/adjusting system according to Claim 1 or 2, **characterized in that** a second communication device is provided which can be connected to the determining device, in order to input at least one non-vehicle-specific parameter, the determining device being designed in such a way that it determines the SETPOINT tyre pressure taking into account the at least one non-vehicle-specific parameter.

4. Automatic vehicle tyre pressure measuring/adjusting system according to Claim 3, **characterized in that** the non-vehicle-specific parameter is selected from the following group: desired maximum speed, state of road of the desired route, external air temperature, weather forecast

5. Automatic vehicle tyre pressure measuring/adjusting system according to one of the preceding claims, **characterized in that** the tyre pressure measuring device has a tyre air temperature measuring device for measuring the tyre air temperature, the determining device being designed in such a way that it determines the SETPOINT tyre pressure taking into account the measured tyre air temperature.

6. Automatic vehicle tyre pressure measuring/adjusting system according to one of the preceding claims, **characterized in that** the automatic manipulator (100; 100b, 100c) has a valve cap screw device (40) for screwing on and unscrewing the valve cap.

7. Automatic vehicle tyre pressure measuring/adjusting system according to one of the preceding claims, **characterized in that** it is installed in the vicinity of a fuel pump at a filling station and can be activated while the vehicle is being refuelled.

8. Automatic vehicle tyre pressure measuring/adjusting system according to one of the preceding claims, **characterized in that** the first communications device (11) can be connected to an on-board computer of the vehicle (1).

9. Automatic vehicle tyre pressure measuring/adjusting system according to one of the preceding claims, **characterized in that** the first communications device (11) can be connected to a mass estimating device which is located in the vehicle and which can estimate the vehicle mass, preferably from the vehicle unladen weight and a drive torque which is required to reach a specific acceleration.

10. Automatic vehicle tyre pressure measuring/adjusting system according to one of the preceding claims, **characterized in that** a road slope correction device is provided for determining a road slope correction for the mass estimating device.

11. Automatic vehicle tyre pressure measuring/adjusting system according to one of the preceding claims, **characterized in that** the determining device is designed in such a way that it determines the SETPOINT tyre pressure taking into account a GPS altitude measurement.

12. Automatic vehicle tyre pressure measuring/adjusting system according to one of the preceding claims, **characterized in that** the determining device is designed in such a way that it determines the SETPOINT tyre pressure by reference to a table stored in it.

13. Automatic vehicle tyre pressure measuring/adjusting system according to one of the preceding claims, **characterized in that** the automatic manipulator (100; 100b, 100c) can be moved along a rail device (120).

14. Automatic vehicle tyre pressure measuring/adjusting system according to one of the preceding claims, **characterized in that** a transmission device which can be connected to the determining device is provided and is designed in such a way that it transmits the SETPOINT tyre pressure and/or a difference between the SETPOINT tyre pressure and the ACTUAL tyre pressure to the vehicle (1) in order to be stored and/or displayed there.

15. Automatic vehicle tyre pressure measuring/adjusting system according to Claim 14, **characterized in that** an evaluation device is provided in the vehicle (1) which is designed in such a way that it evaluates the frequency and/or magnitude of the transmitted differences, and produces therefrom an indicator of tyre problems taking into account a possible change in the differences.

16. Automatic vehicle tyre pressure measuring/adjusting system according to one of the preceding claims, **characterized in that** the determining device is arranged outside the vehicle (1) and the communication device (11) can be connected to it via a wire free interface, preferably an infrared interface or a radio interface.

17. Automatic vehicle tyre pressure measuring/adjusting system according to one of the preceding claims, **characterized in that** the determining device is arranged within the vehicle (1) and can be connected to the tyre pressure adjusting device via a wire free interface, preferably an infrared interface or a radio interface.

18. Automatic vehicle tyre pressure measuring/adjusting method for measuring and adjusting the tyre pressure of a vehicle having the following steps:
the vehicle (1) is parked;
a pressure attachment (30) is positioned in a tyre pressure measuring/adjusting position on the valve (20) of the tyre (1);
at least one vehicle parameter is input into a determining device by means of a first communication device (11) which is located in the vehicle;
the SETPOINT tyre pressure is determined using the determining device taking into account the at least one vehicle-specific parameter;
the ACTUAL tyre pressure is measured using a tyre pressure measuring device which can be connected to the pressure attachment (30);
the determined SETPOINT tyre pressure is compared with the ACTUAL tyre pressure; and
the determined SETPOINT tyre pressure is adjusted using a tyre pressure adjusting device which can be connected to the pressure attachment (30) and can be connected to the determining device in order to transfer the SETPOINT tyre pressure, in order to adjust the transferred SETPOINT tyre pressure if there is a difference between the SETPOINT tyre pressure and ACTUAL tyre pressure, **characterized in that** the pressure attachment is positioned automatically on the valve of the tyre by means of a touch sensor device or an optical image recognition device.
